# EUROPEAN PATENT APPLICATION

(11) **EP 4 760 893 A1**
(43) Date of publication of application: **17.06.2026**
(21) Application number: 25222066.0
(22) Date of filing: 10.12.2025
(51) Int. Cl.: H01M 50/103, H01M 50/15, H01M 50/609, H01M 50/627, H01M 50/645

(54) **BATTERY CELL**

(30) Priority: 12.12.2024 KR 20240184899
(71) Applicant: SK On Co., Ltd., Seoul 03161 (KR)
(72) Inventor: JO, Yoon Ji, 34124 Daejeon (KR); KIM, Hyun Seok, 34124 Daejeon (KR); PARK, Seong Che, 34124 Daejeon (KR); PARK, Jeong Woo, 34124 Daejeon (KR); YANG, So Yeon, 34124 Daejeon (KR)
(74) Representative: Prüfer & Partner mbB Patentanwälte · Rechtsanwälte

(57) **Abstract**

The present disclosure relates to a battery cell including: a case for receiving an electrode assembly; a terminal portion electrically connected to the electrode assembly and protruding in a predetermined protrusion direction toward one surface of the case; a through-hole penetrating the one surface of the case; a protrusion portion extending in the protrusion direction from a periphery of the through-hole, including an opening hole at one end, and connecting an inside and an outside of the case through the opening hole and the through-hole; and a cover portion detachably coupled to the protrusion portion to cover the through-hole.

## Description

### BACKGROUND OF THE INVENTION

### 1. Field

The present disclosure relates to a battery cell, and more particularly, to a battery cell having improved manufacturing efficiency and stability.

### 2. Description of the Related Art

A conventional manufacturing method of a prismatic secondary battery may sequentially mount an electrode assembly inside a case and then couple a cap assembly to an upper end of the case. Thereafter, in the conventional manufacturing method of the prismatic secondary battery, an electrolyte may be injected through an injection hole formed in the cap assembly. For the injection of the electrolyte, the injection hole has a relatively small size for subsequent sealing, and two needle-shaped tubes, namely a vacuum tube and an injection tube, may be inserted into the injection hole.

However, since the diameter of the injection tube is small, there is a disadvantage in that a long injection time is required for the electrolyte to be fully impregnated into the electrodes. In addition, irreversibly sealing the injection hole by welding makes it impossible to discharge gas generated during a subsequent activation process, thereby increasing the internal pressure of the cell and causing an increase in the thickness of the secondary battery cell.

### SUMMARY OF THE INVENTION

According to one aspect of the present disclosure, the technical problem to be solved is to improve the manufacturing efficiency of a battery cell.

According to another aspect of the present disclosure, the technical problem to be solved is to improve the stability of a battery cell.

According to still another aspect of the present disclosure, the technical problem to be solved is to increase the impregnation property of an electrode assembly with respect to an electrolyte.

According to yet another aspect of the present disclosure, the technical problem to be solved is to enable additional injection of the electrolyte.

According to still another aspect of the present disclosure, the technical problem to be solved is to allow an injection port for injecting the electrolyte to be opened during thermal runaway.

Meanwhile, the present disclosure can be widely applied in green technology fields such as an electric vehicle (EV), a battery charging station, and an energy storage system (ESS), as well as photovoltaics and wind power utilizing batteries. In addition, the present disclosure can be used for eco-friendly mobility including electric vehicles and hybrid vehicles to prevent climate change by suppressing air pollution and greenhouse gas emissions.

As a technical means to achieve the technical objects, a battery cell according to the present disclosure may comprise: a case for receiving an electrode assembly; a terminal portion electrically connected to the electrode assembly and protruding in a predetermined protrusion direction toward one surface of the case; a through-hole penetrating the one surface of the case; a protrusion portion extending in the protrusion direction from a periphery of the through-hole, including an opening hole at one end, and connecting an inside and an outside of the case through the opening hole and the through-hole; and a cover portion detachably coupled to the protrusion portion to cover the through-hole.

In one embodiment, in the protrusion direction, a height of the terminal portion based on a bottom surface of the case may be equal to or greater than a height of the cover portion.

In one embodiment, the protrusion portion may be provided in a cylindrical shape and may include a protruding screw thread portion protruded along an outer circumferential surface of the protrusion portion.

In one embodiment, the cover portion may include a disk-shaped cover surface facing the opening hole, and a cover side surface extending from a periphery of the cover surface toward the case so as to face an outer circumferential surface of the protrusion portion when the cover portion is coupled to the protrusion portion.

In one embodiment, the cover portion may further include a cover thread portion protruded in a screw thread shape from an inner circumferential surface of the cover side surface so as to be screw-coupled to the protruding screw thread portion.

In one embodiment, the cover portion may further include a recessed portion formed by being recessed from the cover side surface toward the protrusion portion along a periphery of the cover surface.

In one embodiment, the recessed portion may be disposed at predetermined intervals along a periphery of the cover portion.

In one embodiment, the cover surface may include a groove-shaped notching groove.

In one embodiment, the notching groove may be ruptured when an internal pressure of the case is equal to or greater than a predetermined allowable pressure.

In one embodiment, the cover portion may be coupled to the protrusion portion in a twist-cap manner.

In one embodiment, the terminal portion may include a first terminal portion and a second terminal portion having different electrical polarities, and the protrusion portion may be disposed between the first terminal portion and the second terminal portion.

In one embodiment, the protrusion portion may be disposed closer to one of the first terminal portion and the second terminal portion.

In one embodiment, the terminal portion may include a first terminal portion and a second terminal portion having different electrical polarities, and the through-hole may include a first through-hole disposed closer to the first terminal portion than to the second terminal portion, and a second through-hole disposed closer to the second terminal portion than to the first terminal portion.

In one embodiment, the protrusion portion may include a first protrusion portion extending from the first through-hole and a second protrusion portion extending from the second through-hole, and the cover portion may include a first cover portion detachably coupled to the first protrusion portion and a second cover portion detachably coupled to the second protrusion portion.

According to one embodiment of the present disclosure, the manufacturing efficiency of the battery cell can be improved.

According to another embodiment of the present disclosure, the thermal stability of the battery cell can be improved.

According to still another embodiment of the present disclosure, the impregnation property of the electrode assembly with respect to the electrolyte can be increased.

According to yet another embodiment of the present disclosure, the electrolyte can be additionally injected.

According to still another embodiment of the present disclosure, an injection port for injecting the electrolyte can be opened during thermal runaway.

### BRIEF DESCRIPTION OF THE DRAWINGS

FIG. 1 is an example of a battery cell according to the present disclosure.
FIG. 2 is an exploded view of the battery cell according to the present disclosure.
FIG. 3 is another example of the battery cell according to the present disclosure.
FIG. 4 is a view of the battery cell according to the present disclosure as seen from one direction.
FIG. 5 is an enlarged view of portion S of FIG. 4.
FIG. 6 is still another example of the battery cell according to the present disclosure.

### DETAILED DESCRIPTION

Hereinafter, preferred embodiments of the present disclosure will be described in detail with reference to the accompanying drawings. The configuration or control method of the apparatus described below is merely for explaining the embodiments of the present disclosure and is not intended to limit the scope of the present disclosure, and the same reference numerals used throughout the specification denote the same components.

Specific terms used in the present specification are merely for convenience of explanation and are not intended to limit the illustrated embodiments.

In the present specification, the terms "battery," "secondary battery," and "cell" all refer to a battery cell capable of charge and discharge.

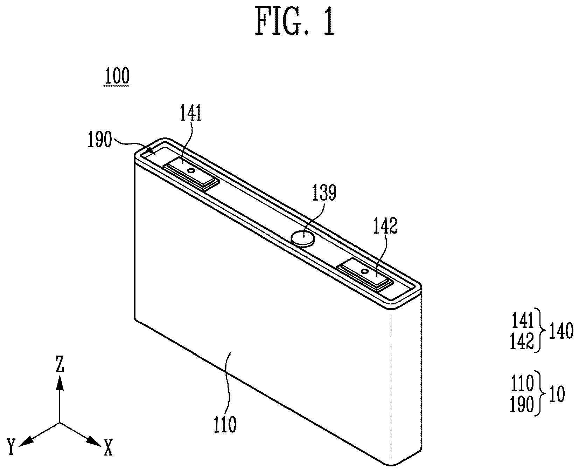

FIG. 1 is an example of a battery cell according to the present disclosure.

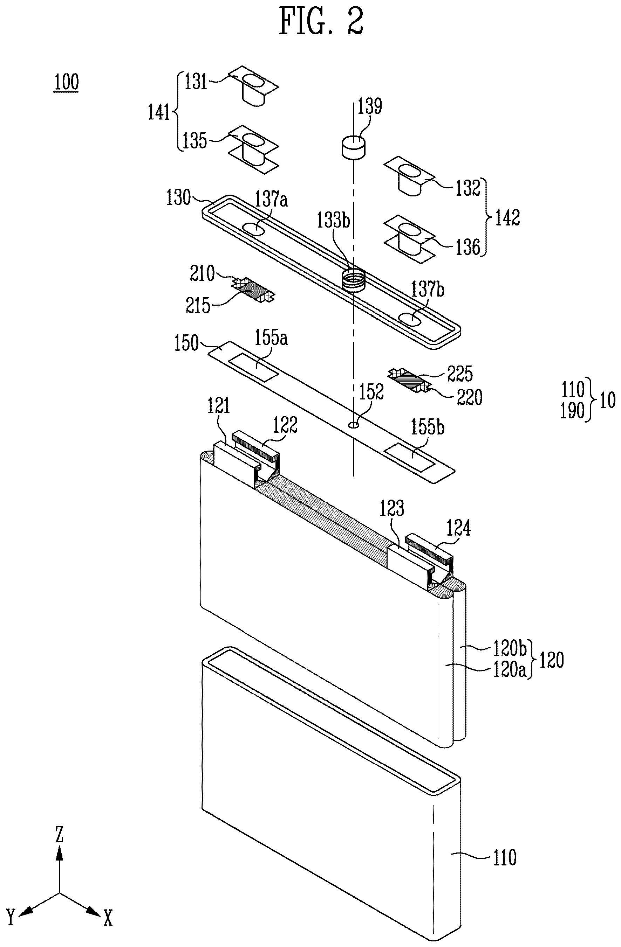

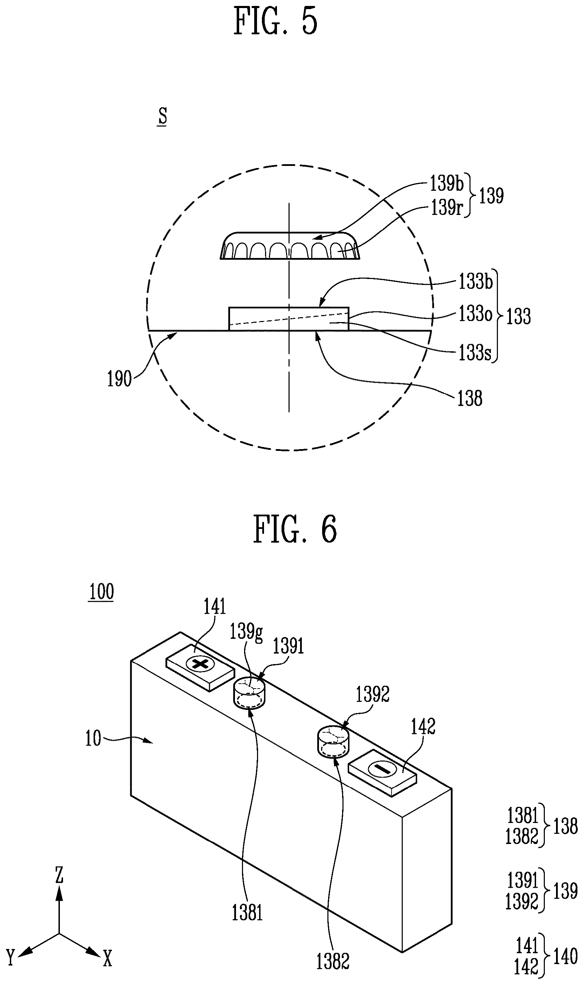

Referring to FIG. 1, a battery cell 100 according to the present disclosure may include: a case 10 for receiving an electrode assembly 120 (see FIG. 2); a terminal portion 140 electrically connected to the electrode assembly 120 and protruding in a predetermined protrusion direction toward one surface of the case 10; a through-hole 138 (see FIG. 5) penetrating the one surface of the case 10; a protrusion portion 133 (see FIG. 2) extending in the protrusion direction from a periphery of the through-hole 138, including an opening hole 133b (see FIG. 2) at one end, and connecting an inside and an outside of the case 10 through the opening hole 133b and the through-hole 138; and a cover portion 139 detachably coupled to the protrusion portion 133 to cover the through-hole 138.

The case 10 may receive the electrode assembly 120 therein. More specifically, the case 10 may include a receiving body 110 including an opening on one surface, and a cap assembly 190 coupled to the receiving body 110 to cover the opening.

The receiving body 110 and the cap assembly 190 may form an internal space in which the electrode assembly 120 is received. The receiving body 110 may include a conductive metal such as aluminum, an aluminum alloy, or nickel-plated steel. The receiving body 110 may have a hexahedral shape including an opening through which the electrode assembly 120 can be inserted. However, the embodiment is not limited thereto, and the shape of the case 10 may be variously modified according to the embodiment.

The cap assembly 190 may be coupled to the receiving body 110 to cover the opening. Therefore, the cap assembly 190 may form one surface of the case 10.

To this end, the cap assembly 190 may close the opening of the receiving body 110. Accordingly, the cap assembly 190 may cover the opening of the receiving body 110 to form an internal space in which the electrode assembly 120 is received.

The terminal portion 140 may be inserted through the cap assembly 190 and may electrically connect the electrode assembly 120 to the outside.

The through-hole 138 may be formed to penetrate one surface of the case 10. Preferably, the through-hole 138 may be formed to penetrate the cap assembly 190.

The protrusion portion 133 may protrude from a periphery of the through-hole 138 in a protrusion direction (for example, a Z direction) in which the terminal portion 140 protrudes. Therefore, a shape of the protrusion portion 133 may be the same as a shape of the periphery of the through-hole 138.

Preferably, the protrusion portion 133 may be provided in a cylindrical shape or a ring shape. Accordingly, the protrusion portion 133 may face the through-hole 138 and may further include an opening hole 133b formed at one end (or a free end) of the protrusion portion 133.

In addition, the protrusion portion 133 may be made of the same material as the case 10. For example, the protrusion portion 133 and the case 10 may be made of aluminum (Al).

After the receiving body 110 and the cap assembly 190 are coupled, an electrolyte may be injected into the inside of the receiving body 110 through the protrusion portion 133.

That is, an electrolyte injection device (not shown) may be inserted through the opening hole 133b and the through-hole 138 to inject an electrolyte (not shown) into the inside of the case 10. The electrode assembly 120 may be immersed in the electrolyte.

Thereafter, the opening hole 133b may be covered by the cover portion 139. Preferably, in order to prevent leakage of the electrolyte and the inflow of external substances, the cover portion 139 may seal the opening hole 133b. For this purpose, the cover portion 139 may include a sealing member (not shown) disposed on an inner surface of the cover portion 139 to seal between the protrusion portion 133 and the cover portion 139.

FIG. 2 is an exploded view of the battery cell according to the present disclosure.

Referring to FIGS. 1 and 2, the case 10 may include a receiving body 110 and a cap assembly 190. The cap assembly 190 may include an outer cover 130 and a cap plate 150.

The cap assembly 190 may include a terminal portion 140 that electrically connects the electrode assembly 120 to the outside through the outer cover 130. The terminal portion 140 may be provided as a plurality of terminals, and the plurality of terminal portions 140 may include a first terminal portion 141 and a second terminal portion 142 having one of positive and negative polarities.

The first terminal portion 141 may include a first terminal 131 made of a metal material and a first gasket 135 that electrically insulates the first terminal 131 from the outer cover 130. Likewise, the second terminal portion 142 may include a second terminal 132 made of a metal material and a second gasket 136 that electrically insulates the second terminal 132 from the outer cover 130.

In addition, the first gasket 135 and the second gasket 136 may also prevent leakage of the electrolyte through terminal holes 137a and 137b (see FIG. 2) into which the first terminal 131 and the second terminal 132 are inserted.

The first terminal 131 and the second terminal 132 may be exposed to an upper portion of the outer cover 130. That is, the first terminal portion 141 and the second terminal portion 142 may be formed to protrude from the cap assembly 190 along a predetermined protrusion direction.

The electrode assembly 120 may be disposed in an internal space of the receiving body 110. For example, the electrode assembly 120 may include a first body 120a and a second body 120b. The first body 120a and the second body 120b may be stacked in a predetermined stacking direction (Y direction).

Since the description of the second body 120b is substantially the same as that of the first body 120a, the following description will focus on the first body 120a.

The first body 120a may include a first electrode plate, a separator, and a second electrode plate, which are formed in a thin plate or film shape. The first body 120a may be formed in various forms, such as a stacked type or a wound type, as needed.

The first electrode plate may include a first coating portion to which a first electrode active material is applied, and a first uncoated portion which is a region where the first electrode active material is not applied. The first coating portion and the first uncoated portion may be electrically connected. The first coating portion may be formed by applying a first electrode active material such as graphite or carbon onto a first electrode current collector formed of a metal foil such as copper, a copper alloy, nickel, or a nickel alloy. The first uncoated portion serves as a passage for current flow between the first electrode plate and the outside of the first electrode plate.

The second electrode plate may include a second coating portion to which a second electrode active material is applied, and a second uncoated portion which is a region where the second electrode active material is not applied. The second coating portion and the second uncoated portion may be electrically connected. The second coating portion may be formed by applying a second electrode active material such as a transition metal oxide onto a second electrode current collector formed of a metal foil such as aluminum or an aluminum alloy. The second uncoated portion serves as a passage for current flow between the second electrode plate and the outside of the second electrode plate.

The separator is disposed between the first electrode plate and the second electrode plate to prevent a short circuit and to allow movement of ions. For example, the separator may be made of a composite film of polyethylene, polypropylene, or polyethylene and polypropylene. In one example, the separator may be disposed one by one between the first electrode plate and the second electrode plate, and a single separator may be alternately folded at one side and the other side to be inserted between a plurality of the first electrode plates and the second electrode plates. In other words, the separator may be formed of a plurality of sheets or may be formed of a single sheet. However, the present disclosure is not limited thereto, and the separator may be variously modified as long as it is disposed between the first electrode plate and the second electrode plate to prevent a short circuit and allow movement of ions.

The first electrode plate, the separator, and the second electrode plate may be stacked with each other in a second direction (Y) within the receiving body 110. The first electrode plate, the separator, and the second electrode plate may extend in a first direction (X) within the receiving body 110.

The electrode assembly 120 may include first to fourth lead portions 121 to 124. The first body 120a may be connected to the first lead portion 121 and the third lead portion 123. The second body 120b may be connected to the second lead portion 122 and the fourth lead portion 124.

For example, the first lead portion 121 may include an uncoated portion of the first electrode plate. The first lead portion 121 may be formed by welding the uncoated portion of the first electrode plate. The second lead portion 122 may include an uncoated portion of the first electrode plate. The second lead portion 122 may be formed by welding the uncoated portion of the first electrode plate. The first lead portion 121 and the second lead portion 122 may include copper or a copper alloy.

Since the descriptions of the third lead portion 123 and the fourth lead portion 124 are the same as those of the first lead portion 121 and the second lead portion 122, detailed descriptions thereof are omitted.

Although it has been described that the first lead portion 121 and the second lead portion 122 include the uncoated portion of the first electrode plate, and the third lead portion 123 and the fourth lead portion 124 include the uncoated portion of the second electrode plate, the embodiment is not limited thereto. For example, the first lead portion 121 and the second lead portion 122 may include the uncoated portion of the second electrode plate, and the third lead portion 123 and the fourth lead portion 124 may include the uncoated portion of the first electrode plate.

The first to fourth lead portions 121 to 124 may penetrate the cap plate 150. Specifically, the first to fourth lead portions 121 to 124 may penetrate through communication holes 155a and 155b of the cap plate 150. The first to fourth lead portions 121 to 124 may be inserted into the communication holes 155a and 155b. The first lead portion 121 and the second lead portion 122 may be inserted into the first communication hole 155a, and the third lead portion 123 and the fourth lead portion 124 may be inserted into the second communication hole 155b.

The cap plate 150 may be coupled to the receiving body 110. The cap plate 150 may be coupled to an upper end portion of the receiving body 110 to close the receiving body 110. The cap plate 150 may include an insulating material. In addition, the cap plate 150 may be disposed on the electrode assembly 120 to protect the electrode assembly 120.

The cap plate 150 may include an injection hole 152. The injection hole 152 may be disposed to correspond to the position of the through-hole 138. Accordingly, the electrolyte may pass through the through-hole 138 and the injection hole 152 to be received inside the case 10.

Meanwhile, the cap assembly 190 may further include insulating plates 210 and 220 positioned to overlap at least a portion of the communication holes 155a and 155b. Therefore, the insulating plates 210 and 220 may be disposed on the electrode assembly 120. The insulating plates 210 and 220 may include a first insulating plate 210 and a second insulating plate 220. Since the description of the second insulating plate 220 is substantially the same as that of the first insulating plate 210, the following description will focus on the first insulating plate 210.

The first insulating plate 210 may be disposed in the first communication hole 155a of the cap plate 150. Specifically, after the first lead portion 121 and the second lead portion 122 are inserted, the first insulating plate 210 may close a remaining portion of the first communication hole 155a.

The cap assembly 190 may include electrode tabs 215 and 225 that electrically connect the first to fourth lead portions 121 to 124 with the first terminal 131 and the second terminal 132. The electrode tabs 215 and 225 may be disposed on the insulating plates 210 and 220. The electrode tabs 215 and 225 may include a first electrode tab 215 and a second electrode tab 225. The first electrode tab 215 may be disposed on the first insulating plate 210, and the second electrode tab 225 may be disposed on the second insulating plate 220.

The outer cover 130 may be coupled to the receiving body 110. The outer cover 130 may close the opening of the receiving body 110. The outer cover 130 may be formed of the same material as the receiving body 110.

As described above, the battery cell 100 according to the present disclosure may include a protrusion portion 133 extending in the protrusion direction from a periphery of the through-hole 138 formed to penetrate one surface of the case 10, the protrusion portion 133 including an opening hole 133b at one end and connecting an inside and an outside of the case 10 through the opening hole 133b and the through-hole 138, and a cover portion 139 detachably coupled to the protrusion portion 133 to cover the through-hole 138.

The protrusion portion 133 may be provided in a cylindrical shape, and the protrusion portion 133, the through-hole 138, and the injection hole 152 may be arranged to overlap with one another along the protrusion direction (Z direction) in which the terminal portion 140 protrudes. In addition, the protrusion portion 133, the through-hole 138, and the injection hole 152 may correspond to each other in a one-to-one manner.

The cover portion 139 may be detachably coupled to the protrusion portion 133 to close the opening hole 133b.

The protrusion portion 133 may be utilized as a passage for injecting the electrolyte. Since the cover portion 139 is detachably coupled to the protrusion portion 133, an inner diameter of the protrusion portion 133 or an inner diameter of the through-hole 138 may be larger than that of a conventional injection port of a battery cell. Therefore, since the electrolyte can be injected at a faster rate and in a larger amount, the manufacturing speed or manufacturing efficiency of the battery cell can be increased.

In addition, since the cover portion 139 is detachably coupled to the protrusion portion 133, the cover portion 139 may be removed when necessary to discharge gas filled in the internal space of the case 10 through the protrusion portion 133. The removal of the gas may be performed not only during an activation process or a degassing process but also during thermal runaway of the battery cell 100.

Referring to FIG. 2, the terminal portion 140 may include a first terminal portion 141 and a second terminal portion 142 having different electrical polarities, and the protrusion portion 133 may be disposed between the first terminal portion 141 and the second terminal portion 142.

The protrusion portion 133 may also be disposed closer to one of the first terminal portion 141 and the second terminal portion 142.

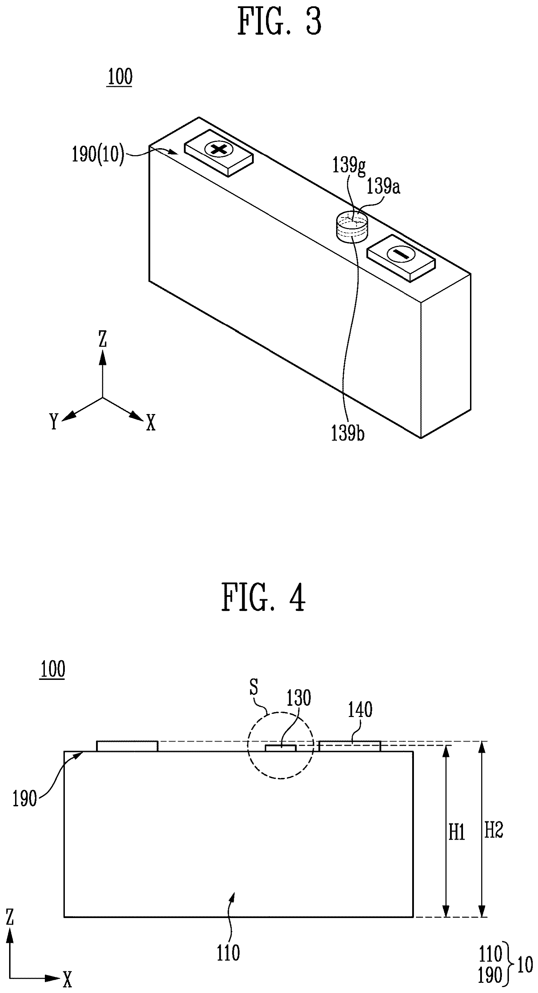

FIG. 3 is another example of the battery cell according to the present disclosure.

As described above, the protrusion portion 133 may be utilized not only as a passage for removing gas during charging, discharging, and degassing processes but also as a passage for injecting the electrolyte during an electrolyte injection process.

For this purpose, the protrusion portion 133 and the cover portion 139 may be screw-coupled (hereinafter referred to as "screw coupling") to each other by threads provided at corresponding positions.

That is, the protrusion portion 133 may be provided in a cylindrical shape and may include a protruding screw thread portion 133s (see FIG. 5) protruded in a screw thread shape along an outer circumferential surface 133o (see FIG. 5) of the protrusion portion.

The cover portion 139 may include a disk-shaped cover surface 139a facing the opening hole 133b, and a cover side surface 139b extending from a periphery of the cover surface 139a toward the case 10 so as to face an outer circumferential surface of the protrusion portion 133 when the cover portion 139 is coupled to the protrusion portion 133.

In addition, the cover portion 139 may further include a cover thread portion 139c protruded in a screw thread shape from an inner circumferential surface of the cover side surface 139b so as to be screw-coupled to the protruding screw thread portion 133s.

The cover portion 139 may be automatically ruptured or deformed to open the opening hole 133b when predetermined conditions are satisfied in a thermal runaway situation.

For this purpose, the cover portion 139 may include a disk-shaped cover surface 139a facing the opening hole 133b, and a cover side surface 139b extending from a periphery of the cover surface 139a toward the case 10 so as to face an outer circumferential surface of the protrusion portion 133 when the cover portion 139 is coupled to the protrusion portion 133. The cover surface 139a may include a groove-shaped notching groove 139g.

The term "groove-shaped" means that, in a region where the notching groove 139g is located, a thickness of the cover surface 139a is thinner than a thickness of a region of the cover surface 139a where the notching groove 139g is not located.

The notching groove 139g may be ruptured when an internal pressure of the case 10 is equal to or greater than a predetermined allowable pressure.

As long as rupture or deformation occurs at or above the allowable pressure to discharge gas inside the case 10 to the outside, a pattern of the notching groove 139g may be variously modified.

Even when the notching groove 139g is not provided, the cover portion 139 may be deformed when the allowable pressure is reached, thereby opening the opening hole 133b and the through-hole 138. For this purpose, a thickness of the cover portion 139 may be thinner than a thickness of the receiving body 110. For example, the receiving body 110 may be made of an aluminum 3003 series material having a thickness of 0.6 mm, while the cover portion 139 may be made of an aluminum 1060 series material having a thickness of 0.4 mm.

FIG. 4 is a view of the battery cell according to the present disclosure as seen from one direction.

Referring to FIG. 4, in the protrusion direction, a height H2 of the terminal portion 140 based on a bottom surface of the case 10 or the receiving body 110 may be equal to or greater than a height H1 of the cover portion 139.

This is to minimize unnecessary wasted space when the battery cell 100 is accommodated in a battery module or a battery pack.

Similarly, in the protrusion direction, the height of the terminal portion 140 based on the cap assembly 190 may be equal to or greater than the height of the cover portion 139. Alternatively, in the protrusion direction, a protruded height of the terminal portion 140 based on the outer cover 130 may be equal to or greater than the height of the cover portion 139.

FIG. 5 is an enlarged view of portion S of FIG. 4.

More specifically, FIG. 5 illustrates another example of coupling between the cover portion 139 and the protrusion portion 133. The cover portion 139 may be coupled to the protrusion portion 133 in a twist-cap manner.

That is, the cover portion 139 may further include a recessed portion 139r formed by being recessed from the cover side surface 139b toward the protrusion portion 133 along a periphery of the cover surface 139a.

The recessed portion 139r may be disposed at predetermined intervals along a periphery of the cover portion 139. That is, a plurality of recessed portions 139r may be provided.

The plurality of recessed portions 139r may be engaged with the protruding screw thread portion 133s formed on the outer circumferential surface 133o of the protrusion portion to seal the opening hole 133b. For this purpose, the cover portion 139 may further include a sealing member (not shown) on an inner side of the cover portion 139. For example, the sealing member may be made of polypropylene.

In order to prevent leakage of the electrolyte through the through-hole 138 and the opening hole 133b and to ensure that the cover portion 139 remains stably coupled to the protrusion portion 133 until the internal pressure of the case 10 reaches a predetermined allowable pressure, the number of the plurality of recessed portions (or teeth) may be 25 or more.

FIG. 6 is still another example of the battery cell according to the present disclosure.

Referring to FIG. 6, the protrusion portion 133 may be provided as a plurality. This is to increase the injection speed of the electrolyte and thereby improve the production efficiency of the battery cell 100.

For this purpose, the terminal portion 140 may include a first terminal portion 141 and a second terminal portion 142 having different electrical polarities, and the through-hole 138 may include a first through-hole 1381 disposed closer to the first terminal portion 141 than to the second terminal portion 142, and a second through-hole 1382 disposed closer to the second terminal portion 142 than to the first terminal portion 141.

The protrusion portion 133 may include a first protrusion portion 1331 extending from the first through-hole 1381 and a second protrusion portion 1332 extending from the second through-hole 1382, and the cover portion 139 may include a first cover portion 1391 detachably coupled to the first protrusion portion 1331 and a second cover portion 1392 detachably coupled to the second protrusion portion 1332.

Referring to FIG. 6, the notching groove 139g may be provided in an X-shaped pattern.

It is understood by those skilled in the art that the plurality of exemplary embodiments described above are specific examples of the following aspects.

Aspect 1. A battery cell comprising: a case for receiving an electrode assembly; a terminal portion electrically connected to the electrode assembly and protruding in a predetermined protrusion direction toward one surface of the case; a through-hole penetrating the one surface of the case; a protrusion portion extending in the protrusion direction from a periphery of the through-hole, including an opening hole at one end, and connecting an inside and an outside of the case through the opening hole and the through-hole; and a cover portion detachably coupled to the protrusion portion to cover the through-hole.

Aspect 2. The battery cell according to aspect 1, wherein, in the protrusion direction, a height of the terminal portion based on a bottom surface of the case is equal to or greater than a height of the cover portion.

Aspect 3. The battery cell according to aspect 1 or 2, wherein the protrusion portion is provided in a cylindrical shape and includes a protruding screw thread portion protruded along an outer circumferential surface of the protrusion portion.

Aspect 4. The battery cell according to any one of the previous aspects, wherein the cover portion includes: a disk-shaped cover surface facing the opening hole; and a cover side surface extending from a periphery of the cover surface toward the case so as to face an outer circumferential surface of the protrusion portion when the cover portion is coupled to the protrusion portion.

Aspect 5. The battery cell according to aspect 4, wherein the cover portion further includes a cover thread portion protruded in a screw thread shape from an inner circumferential surface of the cover side surface so as to be screw-coupled to the protruding screw thread portion.

Aspect 6. The battery cell according to aspect 4, wherein the cover portion further includes a recessed portion formed by being recessed from the cover side surface toward the protrusion portion along a periphery of the cover surface.

Aspect 7. The battery cell according to aspect 6, wherein the recessed portion is disposed at predetermined intervals along a periphery of the cover portion.

Aspect 8. The battery cell according to aspect 4, wherein the cover surface includes a groove-shaped notching groove.

Aspect 9. The battery cell according to aspect 8, wherein the notching groove is ruptured when an internal pressure of the case is equal to or greater than a predetermined allowable pressure.

Aspect 10. The battery cell according to any one of the previous aspects, wherein the cover portion is coupled to the protrusion portion in a twist-cap manner.

Aspect 11. The battery cell according to any one of the previous aspects, wherein the terminal portion includes a first terminal portion and a second terminal portion having different electrical polarities, and the protrusion portion is disposed between the first terminal portion and the second terminal portion.

Aspect 12. The battery cell according to aspect 11, wherein the protrusion portion is disposed closer to one of the first terminal portion and the second terminal portion.

Aspect 13. The battery cell according to any one of the previous aspects, wherein the terminal portion includes a first terminal portion and a second terminal portion having different electrical polarities, and wherein the through-hole includes a first through-hole disposed closer to the first terminal portion than to the second terminal portion, and a second through-hole disposed closer to the second terminal portion than to the first terminal portion.

Aspect 14. The battery cell according to aspect 13, wherein the protrusion portion includes a first protrusion portion extending from the first through-hole, and a second protrusion portion extending from the second through-hole, and wherein the cover portion includes a first cover portion detachably coupled to the first protrusion portion, and a second cover portion detachably coupled to the second protrusion portion.

The present disclosure may be implemented in various modified forms and is not limited to the embodiments described above. Therefore, if the modified embodiments include elements of the claims of the present disclosure, they should be regarded as belonging to the scope of the present disclosure.

## Claims

1. A battery cell comprising:
a case for receiving an electrode assembly;
a terminal portion electrically connected to the electrode assembly and protruding in a predetermined protrusion direction toward one surface of the case;
a through-hole penetrating the one surface of the case;
a protrusion portion extending in the protrusion direction from a periphery of the through-hole, including an opening hole at one end, and connecting an inside and an outside of the case through the opening hole and the through-hole; and
a cover portion detachably coupled to the protrusion portion to cover the through-hole.

2. The battery cell according to claim 1, wherein, in the protrusion direction, a height of the terminal portion based on a bottom surface of the case is equal to or greater than a height of the cover portion.

3. The battery cell according to claim 1 or 2, wherein the protrusion portion is provided in a cylindrical shape and includes a protruding screw thread portion protruded along an outer circumferential surface of the protrusion portion.

4. The battery cell according to any one of the previous claims, wherein the cover portion includes:
a disk-shaped cover surface facing the opening hole; and
a cover side surface extending from a periphery of the cover surface toward the case so as to face an outer circumferential surface of the protrusion portion when the cover portion is coupled to the protrusion portion.

5. The battery cell according to claim 4, wherein the cover portion further includes a cover thread portion protruded in a screw thread shape from an inner circumferential surface of the cover side surface so as to be screw-coupled to the protruding screw thread portion.

6. The battery cell according to claim 4, wherein the cover portion further includes a recessed portion formed by being recessed from the cover side surface toward the protrusion portion along a periphery of the cover surface.

7. The battery cell according to claim 6, wherein the recessed portion is disposed at predetermined intervals along a periphery of the cover portion.

8. The battery cell according to claim 4, wherein the cover surface includes a groove-shaped notching groove.

9. The battery cell according to claim 8, wherein the notching groove is ruptured when an internal pressure of the case is equal to or greater than a predetermined allowable pressure.

10. The battery cell according to any one of the previous claims, wherein the cover portion is coupled to the protrusion portion in a twist-cap manner.

11. The battery cell according to any one of the previous claims, wherein the terminal portion includes a first terminal portion and a second terminal portion having different electrical polarities, and the protrusion portion is disposed between the first terminal portion and the second terminal portion.

12. The battery cell according to claim 11, wherein the protrusion portion is disposed closer to one of the first terminal portion and the second terminal portion.

13. The battery cell according to any one of the previous claims, wherein the terminal portion includes a first terminal portion and a second terminal portion having different electrical polarities, and
wherein the through-hole includes a first through-hole disposed closer to the first terminal portion than to the second terminal portion, and a second through-hole disposed closer to the second terminal portion than to the first terminal portion.

14. The battery cell according to claim 13, wherein the protrusion portion includes a first protrusion portion extending from the first through-hole, and a second protrusion portion extending from the second through-hole, and
wherein the cover portion includes a first cover portion detachably coupled to the first protrusion portion, and a second cover portion detachably coupled to the second protrusion portion.
